Europäisches Patentamt

European Patent Office

Office européen des brevets

(19)

(11)  EP 0 586 658 B1

# EUROPEAN PATENT SPECIFICATION

(12)

(45) Date of publication and mention
of the grant of the patent:
**28.01.1998  Bulletin 1998/05**

(21) Application number: **93906590.0**

(22) Date of filing: **23.03.1993**

(51) Int Cl.6: **C08F 210/16**, C08F 210/18

(86) International application number:
**PCT/EP93/00698**

(87) International publication number:
**WO 93/19107 (30.09.1993 Gazette 1993/24)**

(54) **ELASTOMERIC COPOLYMER OF ETHYLENE WITH ALPHA-OLEFINS**

ELASTOMERE COPOLYMEREN VON ETHYLEN UND ALPHA-OLEFINEN

COPOLYMERE ELASTOMERE D'ETHYLENE ET D'ALPHA-OLEFINES

(84) Designated Contracting States:
**AT BE CH DE ES FR GB IT LI NL SE**

(30) Priority: **23.03.1992  IT   MI920666**

(43) Date of publication of application:
**16.03.1994   Bulletin 1994/11**

(73) Proprietor: **Montell Technology Company bv
2132 MS Hoofddorp (NL)**

(72) Inventors:
• **GALIMBERTI, Maurizio
I-20137 Milano (IT)**
• **RESCONI, Luigi
I-44100 Ferrara (IT)**
• **MARTINI, Emilio
I-40037 Sasso Marconi (IT)**
• **GUGLIELMI, Floriano
I-44100 Ferrara (IT)**
• **ALBIZZATI, Enrico
I-28041 Arona (IT)**

(74) Representative: **Zumstein, Fritz, Dr. et al
Patentanwälte,
Dr. F. Zumstein,
Dipl.-Ing. F. Klingseisen,
Bräuhausstrasse 4
80331 München (DE)**

(56) References cited:
**EP-A- 0 243 127          EP-A- 0 275 925
GB-A- 2 053 246**

• **MAKROMOL. CHEM. vol. 191, no. 12, December
1990, BASEL pages 2853 - 2864 , XP205133
'Effect of catalyst isospecificity on olefin
copolymerization'**

Remarks:
The file contains technical information submitted
after the application was filed and not included in this
specification

**Description**

The present invention relates to new copolymers of ethylene with propylene and/or higher α-olefins, optionally containing minor amounts of units deriving from a diene or polyene, showing valuable elasto-plastic properties also in a non-cured state.

EP and EPDM rubber, which respectively are elastomeric copolymers of ethylene with propylene and with minor proportions of a diene or polyene, are well known products in the art.

Such copolymers are generally prepared by polymerization of mixtures of ethylene and propylene and optionally of a diene or polyene with Ziegler-Natta catalysts obtained from vanadium compounds, such as vanadium acetylacetonate and alkyl-Al halides.

The resulting copolymers require a vulcanization treatment (with peroxides or sulphur) in order to be able to acquire an elastomeric behaviour of interest.

Thermoplastic polyolefin rubbers (TPO) are known which are capable of retaining the processability characteristics of thermoplastic polymers and simultaneously displaying an elastomeric behaviour. These rubbers are obtained by means of high-temperature dynamic vulcanization, in the presence of crosslinking agents, of blends of crystalline polyolefins, in particular isotactic polypropylene, with EP or EPDM rubbers.

Copolymers endowed with a certain level of elasto-plastic properties are known; they are obtained by polymerization of propylene mixtures with minor proportions of ethylene, using catalyst based on titanium compounds supported on magnesium chloride (US Patent 4,298,721). These copolymers are characterized by a large content of crystallinity of polypropylenic type, and optionally of polyethylenic type; the elastomeric properties of these copolymers are unsatisfactory (200% tension set values are too high).

Preparing elastomeric copolymers of ethylene with propylene and/or with α-olefins and optionally with minor proportion of a diene or polyene by means of the polymerization of mixtures of monomers with homogeneous catalysts obtained from Ti, Zr or Hf metallocenes and alumoxane compounds, is known.

European Patent Application EP-A-347128 describes a process for the preparation of elastomeric copolymers of ethylene with α-olefins in which the catalyst used is the product obtained from the reaction of dicyclopentadienyl-Zr, -Ti or Hf compounds, such as ethylene-bis (indenyl)-zirconium dichloride or ethylene-bis(tetrahydroindenyl)-zirconium dichloride or dimethylsilanylene-bis (tetrahydroindenyl)-zirconiumdichloride, withpolymethylalumoxane. Catalysts promoting the isospecific polymerization of α-olefins and non-stereospecific catalysts are indifferently used. The polymerization is carried out in liquid monomer at temperatures comprised between o and 80 °C, preferably between 20 and 60 °C.

European Patent Application EP-A-347129 describes a process for the preparation of elastomeric copolymers of ethylene with α-olefins containing minor proportions of a non-conjugated diene, analogous to the one disclosed in European Patent Application EP-A-347128.

None of the copolymers disclosed in both the above cited EP applications or in the examples shows satisfactory elasto-plastic properties in the non-vulcanized state. 200% tension set values are higher than 30% and the tensile strength is lower than 4-5 MPa.

European Patent Application EP-A-374,695 describes propylene copolymers with ethylene, in which propylene is present in amounts higher than about 57% by mol, containing isotactic polypropylenic sequences obtained by the polymerization of said olefins with catalysts prepared from bridged metallocenes, such as ethylene-bis (tetrahydroindenyl)-zirconium dichloride and polymethylalumoxane. The polymerization is carried out at low temperature, approximately 0 °C in the examples. The copolymers do not display any elasto-plastic properties of interest.

Up to now, no copolymers of ethylene with propylene and/or α-Olefins, optionally containing units deriving from dienes or polyenes, are known which display in their uncured state elastoplastic properties of interest (200% tension set values, 1 min, 25 °C, lower than 30%; tensile strength higher than 3-4 MPa).

It has now been unexpectedly found that copolymer having the above indicated elasto-plastic properties can be synthesised.

The copolymers have an ethylene content comprised between 45 and 85 % by mol, preferably between 50 and 75 % by mol, a content of propylene and/or α-olefins $CH_2$=CHR, in which R is a $C_2$-$C_{10}$ alkyl radical, comprised between 15 and 55 % by mol, preferably between 25 and 55 % by mol, and a content of diene or polyene comprised between 0 and 10 % by mol.

The copolymers are characterized by:

- solubility in pentane at 25 °C higher than 90%;
- substantial absence of crystallinity (fusion enthalpy lower than 20 J/g);
- content of propylene units, or units deriving from said α-olefin, as triads comprised between 4 and 50% of propylene or of said α-olefin; at least 70% of said triads display an isotactic structure;
- a random distribution of ethylene units and propylene units and/or units deriving from said α-olefins in the portion of chain having copolymeric structure (values of the product of the comonomer reactivity ratios comprised between 0.4 and 1).

The high elasto-plastic properties of said copolymers are evidenced by the low values of tension set at 200%, 1 min, 25 °C (the values are generally comprised between 10 and 20%) and by the high tensile strength, higher than 4 MPA and generally comprised between 5 and 7 MPa.

When under stretch (stretch ratio = 4:1), the copolymers display, in their X-ray diffraction fibre spectra, signals which may be attributed to a partial orientation or crystallization of the macromolecular chain.

The copolymers have an inherent viscosity higher than 1.5 dl/g and generally comprised between 2.5 and 3.5 dl/g.

The solubility in pentane is preferably higher than 95%.

The content of diene or polyene units is generally comprised between 0 and 10 % by mol, preferably between 0.5 and 5 % by mol.

The copolymers can be transformed into shaped articles by means of the normal processes of manufacturing of thermoplastic materials (compression moulding, extrusion, injection moulding, etc.) and the resulting articles display elastic properties comparable to those of vulcanized rubbers.

If so desired, the copolymers can be vulcanized by using the same formulations and methodologies as known for EP and EPDM rubbers; rubbers endowed with valuable elastomeric properties are obtained.

The copolymers of the present invention are prepared by polymerization of mixtures of ethylene with propylene and/or with a $\alpha$-olefin $CH_2=CHR$, in which R is an alkyl radical having 2-10 carbon atoms, optionally in the presence of a diene or a polyene, with chiral catalysts obtained from metallocene zirconium derivatives, ethylene-bis (tetrahydroindenyl)-zirconium dichloride or dimethylsilanylene-bis(tetrahydroindenyl)-zirconium dichloride and tetraisobutylalumoxane.

Further $\alpha$-olefins which may be used beside propylene are, for instance, 1-butene, 1-pentene, 4-methyl-1-pentene, 1-hexene, 1-octene, 1-dodecene. The dienes or polyenes which can be used are preferably selected from linear non-conjugated diolefins, such as 1,4-hexadiene, or internal-bridged cyclic diolefins, such as 5-ethylidene-2-norbornene.

The copolymerization is carried out in the liquid phase constituted by propylene and/or by said $\alpha$-olefin, operating at a temperature of approximately 40-50 °C.

Characterizations

The thermal behaviour of the polymer was analyzed on a polymer sample as polymerized, by means of differential scanning calorimetry, according to the following procedure: first scanning stroke from $T_1=-20$ °C to $T_2=180$ °C, with a heating rate of 20 °C/minute; solidification at the cooling rate of 20 °C/minute and a second scanning stroke with the same modalities as of the first one. The reported data of fusion enthalpy refer to the first scanning stroke.

The content of bound ethylene was determined by means of infrared analysis.

The content of propylenic triads or of triads of units derived from the other $\alpha$-olefin was determined by means of $^{13}$C-NMR, with reference to the methine $T_{\beta\beta}$, as already reported in "G.J. Ray, P.E. Johnson, J.R. Knox, Macromolecules, 10, 4, 773(1977)". The reported numeric values refer to the content of propylene or of the other $\alpha$-olefin.

The content of isotactic triads was determined by means of $^{13}$C-NMR, by applying the following formula:

$$Iso\% = (A[T_{\beta\beta}]_{mm}) / (A[T_{\beta\beta}]_{mm} + A[T_{\beta\beta}]_{mr} + A[T_{\beta\beta}]_{rr}),$$

wherein A is the area subtended under the peaks relevant to tertiary carbon atoms ($T_{\beta\beta}$); mm,mr and rr respectively are the isotactic, heterotactic and syndiotactic triads.

The product oh the reactivity ratios $r_1 \cdot r_2$ ($r_1$ is the reactivity ratio of ethylene, $r_2$ of the other olefin ) was calculated by means of the following formula:

$$r_1 \cdot r_2 = 1 + f \cdot (x+1) - (f+1) \cdot (x+1)^{\frac{1}{2}},$$

in which

f = (ethylene mols/propylene mols)$_{copolymer}$;

x = ration between the percentage of propylene in two or more consecutive units and percentage of isolated propylene.

The values of tension set and tensile strength were measured according to ASTM D412.

The solubility in pentane was determined as follows: 2 g of polymer was placed in 250 ml of n-pentane; the latter was heated to boiling temperature, whilst stirring, for 20 minutes and was left to cool down to 25 °C whilst stirring. After 30 minutes the resulting mixtures was filtered through a pleated filter; after vacuum drying the portion of insoluble polymer was determined.

The following examples are supplied for illustrative purposes and shall not be construed as being limitative of the invention.

## EXAMPLES

### Preparation of the catalytic system

Ethylene-bis(tetrahydroindenyl)-zirconium dichloride (EBTHIZrCl$_2$) was prepared by following the method described in H.H.Britzinger et al., J.Organomet.Chem., 288, p.63, (1985).

Tetraisobutylalumoxane (TIBAO) was prepared according to the Example 2 reported in EP-A-384171.

To a weighed amount of EBTHIZrCl$_2$, toluene was added at a volume rate of 2 ml per each mg of metallocene. To such a solution, a toluenic solution of TIBAO was added in such an amount as to obtain the values of Al/Zr ratio and of the molar Al concentration as reported in Table 1. The reaction mixture was kept stirred at the temperature and for the time period reported in Table 1.

### General Polymerization Procedure

A 4 litre steel autoclave equipped with a stirrer, pressure gauge, thermometer, catalyst loading system, monomer feeding lines and thermostatting jacket, was used. 2 litres of propylene, hydrogen until a concentration thereof of 0.1% by mol was reached in the gas phase in the end mixture and ethylene up to the desired pressure at 50 °C, were charged to the autoclave, previously purged with propylene; the toluenic solution containing the catalytic system, prepared according to the above reported modalities, was injected.

The polymerization was carried out at 50 °C, with the total pressure kept constant by feeding ethylene. The polymerization conditions are reported in Table 1. At the end of the polymerization, the polymer was recovered by removing any unreacted monomers and is dried under vacuum.

### EXAMPLE 1-7

By following the above reported general methodology, some polymerization tests were carried out, under such operating conditions as reported in table 1.

In Table 2 , the characterization of the resulting polymer is reported.

## TABLE 1

| Example No. | Zr (mmol·10⁻³) | TIBAO (Al mmol) | Al/Zr (molar ratio) | Al (mmol/l) | Catalyst preparation | | |
|---|---|---|---|---|---|---|---|
| | | | | | Al ([M]) | T (°C) | t (min) |
| 1 | 4.69 | 9.5 | 2026 | 3.6 | 0.8 | 20 | 20 |
| 2 | 4.69 | 9.5 | 2026 | 3.6 | 0.8 | 40 | 20 |
| 3 | 1.17 | 4.75 | 4088 | 1.8 | 0.6 | 20 | 20 |
| 4 | 4.69 | 9.5 | 2026 | 3.61 | 0.20 | 20 | 60 |
| 5 | 4.69 | 9.5 | 2026 | 3.6 | 0.81 | 20 | 8 |
| 6 | 9.38 | 19.0 | 2026 | 7.2 | 1.90 | 20 | 8 |
| 7* | 11.72 | 9.5 | 810 | 3.58 | 0.61 | 20 | 10 |

.... (cont.)

* Terpolymerization carried out with ethyliden-norbornene: 0,87% by weight in the polymerization mixture;

21,1 g is gradually fed during the course of the polymerization.

EP 0 586 658 B1

TABLE 1 (cont.)

| Polymerization | | | | | | |
|---|---|---|---|---|---|---|
| $C_2$ in liquid phase (wt%) | $C_2$ pressure (bar) | $H_2$/gas (mol %) | P tot. (bar) | t (min) | Yield (g) | Activity $Kg_{pol}/g_{Zr}$ |
| 18 | 15.2 | 0.1 | 34.8 | 240 | 641 | 1498.6 |
| 18 | 15.2 | 0.1 | 34.8 | 240 | 263 | 614.9 |
| 18 | 15.2 | 0.1 | 34.8 | 120 | 190 | 1780.2 |
| 18 | 15.2 | - - | 34.8 | 240 | 400 | 935.2 |
| 18 | 15.2 | 0.1 | 34.8 | 240 | 342 | 800.0 |
| 18 | 15.2 | 0.1 | 34.8 | 240 | 760 | 888.9 |
| 17.8 | 15.2 | 0.1 | 34.8 | 300 | 620 | 579.8 |

EP 0 586 658 B1

EP 0 586 658 B1

# TABLE 2

| Example No. | %C$_2$ (by wt.) | I.V. (dl/g) | M$_w$/M$_n$ | DSC I scan. | | DSC II scan. | |
|---|---|---|---|---|---|---|---|
| | | | | M.p. (°C) | H$_f$ | M.p. (°C) | H$_f$ |
| 1 | 55.7 | 2.79 | 3.1 | 37.8 | 0.7 | - - | - - |
| 2 | 66.4 | 3.53 | | 42.3 | 3.9 | 36.3 | 3.8 |
| 3 | 62.6 | 2.53 | | 17.8 | 1.0 | 38.4 | 6.4 |
| 4 | 59.5 | 4.24 | | 47.0 | 8.2 | - - | - - |
| 5 | 64.4 | 2.3 | | 40.6 | 11.9 | - - | - - |
| 6 | 61.2 | 2.4 | | 43.3 | 9.93 | - - | - - |
| 7 * | 56.3 | 3.1 | 1.83 | 44.8 | 1.6 | 37.0 | 0.5 |

\* Terpolymer with ethyliden-norbornene.

... (cont.)

EP 0 586 658 B1

TABLE 2 (cont.)

| NMR analysis | | | Solubility (weight %) | | Tension Set (%) | Tensile Strength (MPa) |
|---|---|---|---|---|---|---|
| triads (%) | Iso % | $r_1 \cdot r_2$ | soluble fraction | insoluble fraction | | |
| 20 | 100 | 0.90 | 100 | - - | 14 | 6.2 |
| | | | 100 | - - | 19 | 7.67 |
| | | | 100 | - - | 18 | 7.09 |
| | | | 100 | - - | | |
| 12.3 | 100 | 0.876 | 100 | - - | 40 | |
| 18.6 | 100 | 0.879 | 100 | - - | 36 | |
| 16.4 | 85 | 0.89 | 100 | - - | 22 | 0.1 |

## Claims

1. Copolymers of ethylene with propylene and/or with $\alpha$-olefins $CH_2=CHR$, in which R is $C_2$-$C_{10}$ alkyl radical, and optionally with minor proportions of units deriving from a diene or a polyene, containing from 45 to 85% by mol of ethylene, from 15 to 55% by mol of propylene and/or $\alpha$-olefin, and from 0 to 10% by mol of diene or polyene, characterized by the following properties:

   - crystallinity content, as measured as fusion enthalpy, lower than 20 J/g;
   - solubility in pentane at 25 °C higher than 90%;
   - content of propylenic units or units deriving from said $\alpha$-olefin, in the form of triads comprised between 4 and 50% of the total content of propylene or said $\alpha$-olefin; at least 70% of said triads displaying an isotactic structure;
   - product of monomer reactivity ratio $r_1 \cdot r_2$ comprised between 0.4 and 1 ($r_1$ is the reactivity ratio of ethylene, $r_2$ is the reactivity ratio of propylene or said $\alpha$-olefin);
   - inherent viscosity higher than 1.5 dl/g.

2. Copolymers according to claim 1, characterized in that the content of ethylene is comprised between 50 and 75% by mol, the content of propylene and/or said $\alpha$-olefin is comprised between 25 and 50% by mol and the content of said diene or polyene is from 0 to 2% by mol.

3. Copolymers of ethylene and propylene according to claim 2, containing from 0 to 2% by mol of units deriving from a non-conjugated diene having a linear structure or a bridged cyclic structure, characterized by the following properties:

   - product of monomer reactivity ratios $r_1 \cdot r_2$ comprised between 0.5 and 0.9;
   - propylene content in the form of triads comprised between 10 and 35% of the total content of propylene in the copolymer, with at least 70% of said triads having an isotactic structure;
   - inherent viscosity higher than 2 dl/g;
   - solubility in pentane higher than 95%.

4. Copolymers according to claim 3 characterized in that said non-conjugated diene is selected from 1,4-hexadiene and 5-ethylidene-2-norbornene.

5. Copolymers according to any of claims 3 or 4, characterized in that they display when stretched (stretching ratio = 4 : 1), X-ray diffraction fibre spectra containing signals due to partial orientation or crystallization of the macromolecular chains.

6. Copolymers according to any of claims from 1 to 5, characterized by a tension set (200%, 20 °C, 1 minute) lower than 30% and a tensile strength higher than 4 MPa.

7. Copolymers according to any of claims from 1 to 6, vulcanized with peroxides or sulphur.

8. Manufactured articles obtained from the copolymers according to any of claims from 1 to 7.


## Patentansprüche

1. Copolymere von Ethylen mit Propylen und/oder mit $\alpha$-Olefinen $CH_2=CHR$, worin R für einen $C_{2-10}$-Alkylrest steht, und gegebenenfalls mit geringeren Anteilen an sich von einem Dien oder einem Polyen ableitenden Einheiten, enthaltend 45 bis 85 Mol-% Ethylen, 15 bis 55 Mol-% Propylen und/oder $\alpha$-Olefin und 0 bis 10 Mol-% Dien oder Polyen, gekennzeichnet durch die folgenden Eigenschaften:

   - Kristallinitätsgehalt, gemessen als Schmelzenthalpie, von geringer als 20 J/g;
   - Löslichkeit in Pentan bei 25°C von höher als 90%;
   - Gehalt an propylenischen Einheiten oder sich von dem $\alpha$-Olefin ableitenden Einheiten in Form von Triaden zwischen 4 und 50% des Gesamtgehalts an Propylen oder diesem $\alpha$-Olefin; wobei zumindest 70% dieser Triaden eine isotaktische Struktur besitzen;
   - Produkt des Monomerenreaktivitätsverhältnisses $r_1 \cdot r_2$ zwischen 0,4 und 1 ($r_1$ ist das Reaktivitätsverhältnis von Ethylen und $r_2$ ist das Reaktivitätsverhältnis von Propylen oder diesem $\alpha$-Olefin);

- inhärente Viskosität von höher als 1,5 dl/g.

2. Copolymere gemäß Anspruch 1, dadurch gekennzeichnet, daß der Gehalt an Ethylen zwischen 50 und 75 Mol-% beträgt, der Gehalt an Propylen und/oder diesem $\alpha$-Olefin zwischen 25 und 50 Mol-% beträgt und der Gehalt an diesem Dien oder Polyen 0 bis 2 Mol-% beträgt.

3. Copolymere von Ethylen und Propylen gemäß Anspruch 2, enthaltend 0 bis 2 Mol-% Einheiten, abgeleitet von einem nichtkonjugierten Dien mit einer linearen Struktur oder einer verbrückten cyclischen Struktur, gekennzeichnet durch die folgenden Eigenschaften:

- Produkt der Monomerenreaktivitätsverhältnisse $r_1 \cdot r_2$ zwischen 0,5 und 0,9;
- Propylengehalt in Form von Triaden zwischen 10 und 35% des Gesamtgehalts an Propylen in dem Copolymeren, wobei zumindest 70% dieser Triaden eine isotaktische Struktur besitzen;
- inhärenten Viskosität von höher als 2 dl/g;
- Löslichkeit in Pentan von höher als 95%.

4. Copolymere gemäß Anspruch 3, dadurch gekennzeichnet, daß das nichtkonjugierte Dien unter 1,4-Hexadien und 5-Ethyliden-2-norbornen ausgewählt ist.

5. Copolymere gemäß einem der Ansprüche 3 oder 4, dadurch gekennzeichnet, daß sie, wenn gestreckt (Streckungsverhältnis = 4:1), Röntgenbeugungsfaserspektren aufweisen, die Signale aufgrund einer partiellen Orientierung oder Kristallisation der makromolekularen Ketten enthalten.

6. Copolymere gemäß einem der Ansprüche 1 bis 5, gekennzeichnet durch eine bleibende Dehnung (200%, 20°C, 1 Minute) von geringer als 30% und eine Zugfestigkeit von höher als 4 MPa.

7. Copolmyere gemäß einem der Ansprüche 1 bis 6, vulkanisiert mit Peroxiden oder Schwefel.

8. Erzeugnisse, erhalten aus den Copolymeren gemäß einem der Ansprüche 1 bis 7.


**Revendications**

1. Copolymères d'éthylène avec du propylène et/ou avec des $\alpha$-oléfines de formule $CH_2=CHR$, dans laquelle R est un radical alkyle en $C_2$-$C_{10}$, et éventuellement avec des proportions mineures d'unités dérivant d'un diène ou d'un polyène, contenant de 45 à 85 % en mole d'éthylène de 15 à 55 % en mole de propylène et/ou d'$\alpha$-oléfines et de 0 à 10 % en moles d'un diène ou d'un polyène, caractérisés par les propriétés suivantes:

- cristallinité telle que mesurée par l'enthalpie de fusion, inférieure à 20 J/g ;
- solubilité dans le pentane à 25°C supérieure à 90 % ;
- teneur en unités propyléniques ou en unités dérivant de ladite $\alpha$-oléfine, sous la forme de triades comprises entre 4 et 50 % de la teneur totale en propylène ou en ladite $\alpha$-olèfine : au moins 70 % desdites triades présentant une structure isotactique ;
- produit des rapports de réactivité des monomères $r_1 \cdot r_2$ compris entre 0,4 et 1 ($r_1$ étant le rapport de réactivité de l'éthylène, $r_2$ étant le rapport de réactivité du propylène ou de ladite $\alpha$-oléfine) ;
- viscosité inhérente supérieure à 1.5 dl/g.

2. Copolymères selon la revendication 1, caractérisés en ce que la teneur en éthylène est comprise entre 50 et 75 % en mole, la teneur en propylène et/ou en ladite $\alpha$-oléfine est comprise entre 25 et 50 % en moles et la teneur en ledit diène ou polyène est comprise entre 0 et 2 % en moles.

3. Copolymères selon la revendication 2, contenant de 0 à 2 % en moles d'unités dérivant d'un diène non conjugué présentant une structure linéaire ou une structure cyclique pontée, caractérisés par les propriétés suivantes ;

- produit des rapports de réactivité des monomères $r_1 \cdot r_2$ est compris entre 0,5 et 0,9 ;
- teneur en propylène sous la forme de triades comprise entre 10 et 35 % de la teneur totale propylène dans le copolymère avec au moins 70 % desdites triades présentant une structure isotactique :
- viscosité inhérente supérieure à 2 dl/g .

-   solubilité dans le pentane supérieure à 95 %.

4.  Copolymères selon la revendication 3, caractérisés en ce que ledit diène non conjugué est sélectionné parmi le 1,4-hexadiène et le 5-éthylidène -2-norbornéne.

5.  Copolymères selon l'une quelconque des revendications 3 ou 4, caractérisés en ce qu'ils présentent, lorsqu'ils sont étirés (rapport d'étirement = 4:1) un spectre de fibre de diffraction aux rayons-X contenant des signaux dus à une orientation ou une cristallisation partielles des chaînes macromoléculaires.

6.  Copolymères selon l'une quelconque des revendications 1 à 5, caractérisés par une déformation rémanente après allongement (200 %. 20°C, 1 minute) inférieure à 30 % et une résistance à la traction supérieure à 4 MPa.

7.  Copolymères selon l'une quelconque des revendications 1 à 7, vulcanisés à l'aide de peroxydes ou de soufre.

8.  Articles manufacturés obtenus à partir des copolymères selon l'une quelconque des revendications 1 à 7.